(19) Europäisches Patentamt
European Patent Office
Office européen des brevets

(11) Veröffentlichungsnummer: **0 209 661 A2**

(12) **EUROPÄISCHE PATENTANMELDUNG**

(21) Anmeldenummer: 86106681.9

(22) Anmeldetag: 16.05.86

(51) Int. Cl.⁴: **C08L 101/00**, C08J 3/06

(30) Priorität: 24.05.85 DE 3518673

(43) Veröffentlichungstag der Anmeldung: 28.01.87 Patentblatt 87/05

(84) Benannte Vertragsstaaten: AT BE CH DE FR GB IT LI NL SE

(71) Anmelder: **Henkel Kommanditgesellschaft auf Aktien**
**Postfach 1100 Henkelstrasse 67**
**D-4000 Düsseldorf-Holthausen(DE)**

(72) Erfinder: **Busch, Peter, Dr.**
**Gottfried-August-Bürger-Strasse 10**
**D-4006 Erkrath(DE)**
Erfinder: **Thiele, Klaus**
**Rügenweg 5**
**D-4018 Langenfeld(DE)**

# (54) Leicht auflösbare Zubereitungen kationischer Polymerer.

(57) Pulverförmige Zubereitungen kationischer Polymerer, die

5 bis 95 Gew.-% eines festen, feinteiligen, wasserlöslichen, kationischen Polymers

5 bis 95 Gew.-% eines festen, feinteiligen, wasserlöslichen, anionischen oberflächenaktiven Mittels und gegebenenfalls

0 bis 50 Gew.-% inerter, fester, feinteiliger Hilfs-und Trägerstoffe enthalten, lassen sich leichter unter nur langsamer Bewegung des Löseansatzes auflösen.

Eine besonders dramatische Verbesserung des Auflöseverhaltens zeigen erfindungsgemäße Zubereitungen aus 50 bis 90 Gew.-% eines festen, feinteiligen, wasserlöslichen Polygalactomannan-Derivates und 10 bis 50 Gew.-% eines Alkali-oder Ammoniumsalzes von Alkylsulfaten mit 8 bis 22 C-Atomen.

EP 0 209 661 A2

## "Leicht auflösbare Zubereitungen kationischer Polymerer"

Gegenstand der Erfindung sind pulverförmige Zubereitungen kationischer Polymerer, deren Auflösbarkeit in Wasser durch einen Zusatz fester, feinteiliger, wasserlöslicher anionischer oberflächenaktiver Mittel verbessert ist.

Viele feste, feinteilige kationische Polymere haben den Nachteil, daß sich beim Auflösen in Wasser die Teilchen während der Hydratation zu größeren Aggregaten zusammenballen und dann die weitere Auflösung dieser sich bildenden Gelklumpen infolge deren hoher Viskosität sehr langsam verläuft. Auf diese Weise benötigen pulverförmige wasserlösliche Polymere oft sehr lange Lösezeiten oder es sind besonders intensive Misch-und Rühraggregate erforderlich, um die sich bildenden Gelteilchen durch hohe Scherkräfte zu zerkleinern. Dies ist besonders störend bei kationischen wasserlöslichen Polymeren, die als Flockungsmittel, Schlammentwässerungsmittel, Papierhilfsmittel und als Zusätze zu kosmetischen Haut- und Haarbehandlungsmitteln große technische Bedeutung erlangt haben.

Es bestand daher die Aufgabe, Zubereitungen solcher kationischer Polymerer aufzufinden, die ein besseres Löseverhalten in Wasser zeigen und die sich ohne intensive Misch-und Rühraggregate in kurzer Zeit in Wasser homogen auflösen lassen.

Es wurde gefunden, daß pulverförmige Zubereitungen kationischer Polymerer, die gekennzeichnet sind durch einen Gehalt von

10 -99 Gew.-% eines festen, feinteiligen, wasserlöslichen kationischen Polymeren

1 -90 Gew.-% eines festen, feinteiligen, wasserlöslichen anionischen oberflächenaktiven Mittels und gegebenenfalls

0 -50 Gew.-% inerter, fester, feinteiliger Hilfs-und Trägerstoffe,

sich ohne Bildung von größeren Gelklumpen in sehr kurzer Zeit in Wasser auflösen lassen. Der Einsatz hochtouriger Rührwerke oder scherstarker Mischaggregate ist nicht nur überflüssig, es empfiehlt sich sogar, die Auflösung der erfindungsgemäßen pulverförmigen Zubereitungen kationischer Polymerer in Wasser ohne solche Geräte unter nur langsamer Bewegung des Löseansatzes durchzuführen.

Die erfindungsgemäßen Zubereitungen lassen sich auch in wäßrigen Lösungen, die bereits oberflächenaktive Mittel enthalten, z. B. in Wasch-und Reinigungsmitteln für haut-und haarkosmetische Anwendungen wie Shampoos, Badepräparate und flüssigen Seifen, wesentlich rascher auflösen als feste, feinteilige, wasserlöslich kationische Polymere allein. Ein weiterer Vorteil ist der, daß der Anteil an festen, feinteiligen, wasserlöslichen anionischen oberflächenaktiven Mitteln bei den genannten haut-und haarkosmetischen Anwendungen nicht störend ist.

Als wasserlösliche kationische Polymere kommen alle Polymeren, bevorzugt im Molekulargewichtsbereich von 1 000 bis 3 000 000, in Frage, die entweder in der Polymerkette freie oder alkylsubstituierte Aminogruppen oder quartäre Ammoniumgruppen enthalten oder an die Polymerkette direkt oder über Zwischenglieder gebundene, sekundäre oder tertiäre Aminogruppen oder quartäre Ammoniumgruppen tragen. Diese Amino- oder quartären Ammoniumgruppen können auch Glieder von 5-oder 6-gliedrigen Ringsystemen sein, z. B. von Morpholin-, Piperidin-, Piperazin-oder Imidazol-Ringen. Zahlreiche Beispiele für solche wasserlöslichen Polymeren sind z. B. in US-PS-4.240.450 näher beschrieben.

Weitere geeignete kationische Polymere sind z. B. Celluloseether, deren Anhydroglucoseeinheiten jeweils 1 -3 an die Sauerstoffatome von Hydroxylgruppen gebundene Substituenten mit quartären Ammoniumgruppen tragen. Solche Polymere sind z. B. aus US-PS-3.472.840 bekannt. Geeignete kationische Polymere sind auch Pfropfpolymere aus Hydroxyethylcellulose und Dimethyldiallylammoniumchlorid, die z. B. unter der Handelsbezeichnung Celquat L-200 erhältlich sind. Weiterhin eignen sich Copolymerisate aus Acrylamid bzw. Methacrylamid und Dialkylaminolalkylacrylat-oder methacrylat, z. B. Diethylaminoethyl-methacrylat, wie sie z. B. aus DE-OS-22 55 391 bekannt sind.

Bevorzugt geeignete kationische Polymere sind naturgemäß solche, die in fester, feinteiliger Form besondere Schwierigkeiten bei der Auflösung in Wasser bereiten. Solche kationischen Polymeren sind vor allem die aus GB-PS-1.136.842 bekannten kationischen Polygalactomannan-Derivate.

Galactomannane sind Polysaccharide, die in den Endospermzellen vieler Leguminosensamen vorkommen, die aber im industriellen Maßstab nur aus Johannesbrotkernmehl (locust bean gum), Guar-Gummi (guar gum) und Tara-Gummi (tara gum) gewonnen werden, sind aufgebaut aus einer linearen Mannan-Hauptkette, bestehend aus beta-(1.4)-glycosidisch verknüpften Mannopyranosebausteinen, an die als Verzweigung einzelne Galactopyranose-Reste in alpha-(1.6)-glycosidischer Bindung fixiert sind. Die einzelnen Polygalactomannane unterscheiden sich hauptsächlich durch das Mannose-Glactose-Verhältnis. Die kationischen

Derivate der Polygalactomannane werden hergestellt durch Umsetzung von Hydroxylgruppen des Polysaccharids mit reaktiven quartären Ammoniumverbindungen. Als reaktive quartäre Ammoniumverbindungen eignen sich z. B. solche der allgemeinen Formel

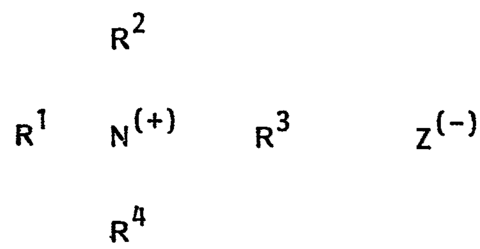

in der $R^1$, $R^2$ und $R^3$ z. B. Methyl-oder Ethylgruppen und $R^4$ eine Epoxyalkylgruppe der Formel

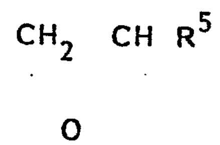

oder eine Halohydringruppe der Formel

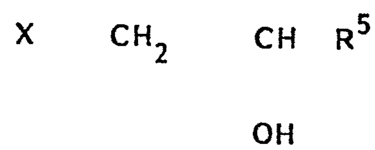

in welchen $R^5$ eine Alkylgruppe mit 1 -3 C-Atomen, X = Chlor oder Brom und Z ein Anion wie z. B. Chlorid, Bromid, Jodid oder Hydrogensulfat ist. Der Substitutionsgrad sollte wenigstens 0,01 und bevorzugt wenigstens 0,05 sein und liegt typischerweise zwischen 0,05 und 0,5. Ein besonders geeignetes quartäres Ammoniumderivat eines Polygalactomannans ist z. B. das Guarhydroxypropyl-trimethylammoniumchlorid, welches an die Sauerstoffatome der Hydroxylgruppen des Polysaccharids gebundene kationische Gruppen der Formel

$CH_2\ CH(OH)\ CH_2\ N^{(+)}\ (CH_3)_3\ Cl^{(-)}$

trägt. Solche kationischen Guar-Derivate sind z. B. unter der Handelsbezeichnung "Cosmedia Guar C 261" auf dem Markt. Der Substitutionsgrad (DS) von Cosmedia Guar C 261 liegt bei 0,07. Auch die Handelsprodukte "Jaguar C-13" (DS = 0,11 -0,13) und "Jaguar C 13 S" (DS = 0,13) gehören diesem Typ an.

Wenn als kationisches Polymeres ein kationisches Polygalactomannan-Derivat eingesetzt wird, so wird bevorzugt ein Produkt verwendet, dessen Teilchengrößenverteilung so ist, daß wenigstens 69 Gew.-% der Teilchen nicht größer als 45 Mikron und wenigstens 98 Gew.-% der Teilchen nicht größer als 105 Mikron sind.

Für die Ausführung der Erfindung geeignete feste, feinteilige wasserlösliche anionische oberflächenaktive Mittel sind z. B. die Alkali-und Ammoniumsalze von Alkylsulfaten mit 8 -22 C-Atomen.

Besonders geeignet sind die Alkalisalze von Schwefelsäurehalbestern der linearen oder wenig verzweigten Fettalkohole mit 10 - 16 C-Atomen, z. B. Natriumlaurylsulfat. Weitere geeignete pulverförmige anionische Tenside sind z. B. die Alkalisalze von linearen und verzweigtkettigen Alkylbenzolsulfonaten mit 6 -16 C-Atomen in der Alkylgruppe, Alken-und Hydroxyalkansulfonate, wie sie durch Sulfonierung von alpha-Olefinen mit 10 -18 C-Atomen erhalten werden, Sulfobernsteinsäuremonoalkylester-Alkalisalze mit 8 -18 C-Atomen in der Alkylgruppe, Sulfobernsteinsäuredialkylester-Alkalisalze mit 6 -10 C-Atomen in der Alkylgruppe, Mono-und Dialkylnaphthalinsulfonat-Alkalisalze mit 1 -8 C-Atomen in der Alkylgruppe, Alkylpolyglycolethercarboxylate mit 8 -18 C-Atomen in der Alkylgruppe und 2 -6 Glycolethergruppen im Molekül, Acylsarkorine, Acyltauride und Acylisethionate mit 8 -18 C-Atomen in der Acylgruppe und alpha-Sulfofettsäuremethylester-Alkalisalze von Fettsäuren mit 8 - 18 C-Atomen.

Geeignet sind auch feste, feinkörnige Zubereitungen aus anionischen oberflächenaktiven Stoffen, die sich in reiner Form nicht in freifließende Pulverform bringen lassen, und inerten Hilfs-und Trägerstoffen, die eine nicht klebrige, feinkörnige, freifließende Zubereitung solcher, in reiner Form pastösen, niedrigschmelzenden oder klebrigen Tenside ermöglichen. Solche geeigneten Hilfs-und Trägerstoffe sind bevorzugt gut wasserlöslich. Wasserlösliche Hilfs-und Trägerstoffe sind z. B. anorganische, wasserlösliche Salze wie z. B. Natriumsulfat, Natriumchlorid, Natriumcarbonat, Natriumhydrogencarbonat, Natriumphosphat, gegebenenfalls auch die entsprechenden Kalium-oder Ammoniumsalze. Auch andere, nicht salzartige wasserlösliche Trägerstoffe wie z. B. Harnstoff oder wasserlösliche Mono-und Disaccharide können verwendet werden.

Die genannten Hilfs-und Trägerstoffe können auch zur Konfektionierung der erfindungsgemäßen Zubereitungen kationischer Polymerer direkt verwendet werden, um die Pulverqualität oder die Fließeigenschaften der Zubereitungen zu verbessern. Der Anteil solcher wasserlöslicher Hilfs-und Trägerstoffe sollte im allgemeinen nicht mehr als 50 Gew.-% der erfindungsgemäßen Zubereitungen ausmachen.

Weiterhin können die erfindungsgemäßen Zubereitungen zur Verringerung der Staubentwicklung untergeordnete Mengen von flüssigen oder niedrigschmelzenden Hilfsstoffen, bevorzugt wasserlösliche Produkte wie z. B. Ethylenglycol, Propylenglycol, Glycerin, Polyethylenglycole, Polypropylenglycole, Ethlylenglycol Propylenglycol-Blockpolymere, flüssige oder niedrigschmelzende Alkyl-(poly)glycolether mit 1 -22 C-Atomen in der Alkylgruppe und 1 -20 Glycolethergruppen enthalten. Die Menge dieser Hilfsstoffe sollte aber im allgemeinen nicht über 5 Gew.-% der Zubereitung liegen, damit die freifließenden Pulvereigenschaften nicht verschlechtert werden.

Bevorzugt bestehen die erfindungsgemäßen pulverförmigen Zubereitungen aus 40 -90 Gew.-% eines festen, feinteiligen wasserlöslichen kationischen Polymeren und 10 -60 Gew.-% eines festen, feinteiligen wasserlöslichen anionischen oberflächenaktiven Mittels. Die vorgenannten Hilfs- und Trägerstoffe werden nur zugesetzt, wenn dies zur Verhinderung der Klebrigkeit und/oder zur Verminderung der Staubentwicklung erforderlich ist.

Die Herstellung der erfindungsgemäßen Zubereitungen kann im einfachsten Falle durch bloßes Vermischen der Komponenten erfolgen. Wenn die Korngröße oder Partikelbeschaffenheit der Komponenten unterschiedlich ist, empfiehlt es sich, das grobkörnigere Produkt durch Vermahlen der Korngröße der feinkörnigeren Komponente anzugleichen. Bevorzugt verfährt man aber so, daß die Komponenten zunächst gemischt und das Gemisch durch einen Mahlprozess homogenisiert wird. Auf diese Weise kann am sichersten verhindert werden, daß die erfindungsgemäßen Zubereitungen bei Transport oder Lagerung eine Entmischung erleiden.

Bei wasserlöslichen kationischen Polymeren, die aus einer wäßrigen Lösung durch Sprühtrocknung in die Pulverform überführt werden, empfiehlt es sich, vor der Sprühtrocknung das anionische oberflächenaktive Mittel in der Lösung des kationischen Polymeren aufzulösen und dann die Sprühtrocknung durchzuführen.

Die folgenden Beispiele sollen den Gegenstand der Erfindung näher erläutern ohne ihn hierauf zu beschränken.

Beispiele

1.) Herstellung verschiedener Zubereitungen kationischer Polymerer

1.1) 4 g Guar-hydroxypropyl-trimethylammoniumchlorid (Cosmedia (R) Guar C 261) und 2 g Natrium-dodecylsulfat (Texapon(R) L 100) wurden vermischt und in einem Mörser leicht verrieben. Es entstand ein homogenes, feinteiliges Pulver.

1.2) 5 g Guar-hydroxypropyl-trimethylammoniumchlorid (Cosmedia (R) Guar C 261) und 1 g Natriumalkyl-($C_{12}$-$C_{18}$)-sulfat (Texapon(R) Z hochkonz. Pulver) wurden vermischt und in einem Mörser leicht verrieben. Es wurde ein homogenes feinteiliges Pulver erhalten.

1.3) 3 g Guar-hydroxypropyl-trimethylammoniumchlorid (Cosmedia [(R)] Guar C 261) und 2 g Natriumlaurylsulfat (Texapon [(R)] K 12) wurden vermischt und in einem Mörser leicht verrieben. Es wurde ein homogenes, feinteiliges Pulver erhalten.

2. Auflösung der Zubereitungen in Wasser

Je 3 g der Zubereitungen nach 1.1, 1.2 und 1.3 sowie 3 g des reinen Guar-hydroxypropyl-trimethylammoniumchlorids (Vergleichsversuch) wurden auf folgende Weise in Wasser aufgelöst:

Auf die Oberfläche von 100 ml Wasser von 20°C - (in einem 250-ml-Becherglas) wurden 0,5 g der Zubereitung gegeben. Nach ca. 30 Sekunden konnte das Pulver völlig eingerührt werden. In gleicher Weise wurden weitere Portionen von je 0,5 g der Zubereitung eingerührt, bis insgesamt 3,0 g aufgelöst waren.

Die Zubereitungen nach 1.1, 1.2 und 1.3 verteilten sich dabei sofort auf der Wasseroberfläche, größere Klumpen des Pulvers fielen spontan auseinander. Durch das leichte Rühren wurden die Zubereitungen gleichmäßig in dem Wasser verteilt und lösten sich ohne Bildung größerer Gelklumpen in wenigen Sekunden auf unter Bildung einer homogenen, leicht getrübten Lösung.

Vergleichsversuch

Bei dem Versuch, reines Guar-hydroxypropyltrimethylammoniumchlorid (Cosmedia Guar C 261) in Wasser aufzulösen, blieb das Pulver auf der Wasseroberfläche liegen, beim Beginn des Rührens bildeten sich Gelklumpen, zum Teil mit Pulvereinschlüssen. Auch nach 5 Minuten Rühren hatten sich die Gelklumpen noch nicht aufgelöst.

## Ansprüche

1. Pulverförmige Zubereitung kationischer Polymerer, gekennzeichnet durch einen Gehalt von

5 -95 Gew.-% eines festen, feinteiligen, wasserlöslichen kationischen Polymeren,

5 -95 Gew.-% eines festen, feinteiligen, wasserlöslichen anionischen oberflächenaktiven Mittels,

0 -50 Gew.-% inerter, fester, feinteiliger Hilfs-und Trägerstoffe.

2. Pulverförmige Zubereitung nach Anspruch 1, dadurch gekennzeichnet, daß das kationische Polymere ein kationisches Polygalactomannan-Derivat ist.

3. Pulverförmige Zubereitung nach Anspruch 1 oder 2, dadurch gekennzeichnet, daß das anionische oberflächenaktive Mittel das Alkali-oder Ammoniumsalz eines Alkylsulfats mit 8 -22 C-Atomen ist.

4. Pulverförmige Zubereitung nach den Ansprüchen 1 -3, dadurch gekennzeichnet, daß sie aus

50 -90 Gew.-% eines festen, feinteiligen, wasserlöslichen kationischen Polymeren und

10 -50 Gew.-% eines festen, feinteiligen wasserlöslichen anionischen oberflächenaktiven Mittels

besteht.

5. Verfahren zur Herstellung pulverförmiger Zubereitungen nach den Ansprüchen 1 -4, dadurch gekennzeichnet, daß die Komponenten gemischt werden und das Gemisch durch einen Mahlprozess homogenisiert wird.